# EUROPEAN PATENT APPLICATION

(11) **EP 4 800 951 A1**
(43) Date of publication of application: **02.09.2026**
(21) Application number: 24884244.5
(22) Date of filing: 05.09.2024
(51) Int. Cl.: H04L 1/1607

(54) **DATA TRANSMISSION CONTROL METHOD AND APPARATUS, AND STORAGE MEDIUM**

(30) Priority: 31.10.2023 CN 202311443387
(71) Applicant: ZTE Corporation, Shenzhen, Guangdong 518057 (CN)
(72) Inventor: LIU, Yu, Shenzhen, Guangdong 518057 (CN); XIE, Feng, Shenzhen, Guangdong 518057 (CN); WANG, Fei, Shenzhen, Guangdong 518057 (CN)
(74) Representative: Ziebig Hengelhaupt Intellectual Property Attorneys Patentanwaltskanzlei PartGmbB
(86) International application number: PCT/CN2024/117216
(87) International publication number: WO 2025/092237

(57) **Abstract**

The present disclosure provides a data transmission control method and apparatus, and a storage medium. The method comprises: determining whether a first condition is met; if the first condition is met, sending a first message to a second communication node, the first message being used for requesting to transmit new data between a first communication node and the second communication node; and receiving a second message sent by the second communication node, the second message being used for indicating whether to transmit the new data between the first communication node and the second communication node.

## Description

The present disclosure claims the priority to the Chinese patent application No. 202311443387.3, filed on October 31, 2023, the entire content of which is incorporated herein by reference.

### TECHNICAL FIELD

The present disclosure relates to the technical field of wireless communication, and in particular, to a data transmission control method and apparatus, and a storage medium.

### BACKGROUND

In the current wireless communication system, for an uplink data transmission, a network schedules by a scheduling request (SR) or a buffer status report (BSR) from user equipment (UE); and for a downlink data transmission, the network schedules according to a current downlink data volume. The network does not need to consider the complete transmission of large data (such as a large file), because the large file has already been fragmented on an application layer.

### SUMMARY

The embodiments of the present disclosure provide a data transmission control method and apparatus, and a storage medium.

In an aspect, a data transmission control method is provided, and applied to a first communication node, and the data transmission control method includes:
determining whether a first condition is met;
in response that the first condition is met, sending a first message to a second communication node, where the first message is used to request a transmission of new-type data between the first communication node and the second communication node; and
receiving a second message sent from the second communication node, where the second message is used to indicate whether to transmit the new-type data between the first communication node and the second communication node.

In another aspect, a data transmission control method is provided, and applied to a second communication node, and the data transmission control method includes:
receiving a first message sent from a first communication node, where the first message is used to request a transmission of new-type data between the first communication node and the second communication node; and
sending a second message to the first communication node, where the second message is used to indicate whether to transmit the new-type data between the first communication node and the second communication node.

In yet another aspect, a transmission control apparatus is provided, and applied to a first communication node, and the transmission control apparatus includes:
a determination module, configured to determine whether a first condition is met;
a sending module, configured to, in response that the first condition is met, send a first message to a second communication node, where the first message is used to request a transmission of new-type data between the first communication node and the second communication node; and
a receiving module, configured to receive a second message sent from the second communication node, where the second message is used to indicate whether to transmit the new-type data between the first communication node and the second communication node.

In yet another aspect, a transmission control apparatus is provided, and applied to a second communication node, and the transmission control apparatus includes:
a receiving module, configured to receive a first message sent from a first communication node, where the first message is used to request a transmission of new-type data between the first communication node and the second communication node; and
a sending module, configured to send a second message to the first communication node, where the second message is used to indicate whether to transmit the new-type data between the first communication node and the second communication node.

In still another aspect, a communication apparatus is provided, including: a memory and a processor, where the memory and the processor are coupled; the memory is configured to store a computer program; the processor, upon executing the computer program, implements the data transmission control method according to any one of the above aspects or embodiments.

In still another aspect, a computer-readable storage medium is provided, the computer-readable storage medium stores computer program instructions, and the computer program instructions, upon being executed by a processor, implement the data transmission control method according to any one of the above aspects or embodiments.

In still another aspect, a computer program product is provided, the computer program product includes computer program instructions, and the computer program instructions, upon being executed by a processor, implement the data transmission control method according to any one of the above aspects or embodiments.

### BRIEF DESCRIPTION OF THE DRAWINGS

In order to illustrate the technical solutions in the present disclosure more clearly, the drawings required in some embodiments of the present disclosure will be briefly introduced below, and it is obvious that the drawings in the following description are only drawings of some embodiments of the present disclosure. For those ordinary skilled in the art, other drawings may also be obtained based on these drawings.
FIG. 1 is an architecture schematic diagram of a wireless communication system provided in some embodiments of the present disclosure.
FIG. 2 is a flowchart 1 of a data transmission control method provided in some embodiments of the present disclosure.
FIG. 3 is a flowchart 2 of a data transmission control method provided in some embodiments of the present disclosure.
FIG. 4 is a flowchart 3 of a data transmission control method provided in some embodiments of the present disclosure.
FIG. 5 is a flowchart 4 of a data transmission control method provided in some embodiments of the present disclosure.
FIG. 6 is a flowchart 5 of a data transmission control method provided in some embodiments of the present disclosure.
FIG. 7 is a flowchart 6 of a data transmission control method provided in some embodiments of the present disclosure.
FIG. 8 is a flowchart 7 of a data transmission control method provided in some embodiments of the present disclosure.
FIG. 9 is a flowchart 8 of a data transmission control method provided in some embodiments of the present disclosure.
FIG. 10 is a flowchart 9 of a data transmission control method provided in some embodiments of the present disclosure.
FIG. 11 is a flowchart 10 of a data transmission control method provided in some embodiments of the present disclosure.
FIG. 12 is a structural schematic diagram 1 of a transmission control apparatus provided in some embodiments of the present disclosure.
FIG. 13 is a structural schematic diagram 2 of a transmission control apparatus provided in some embodiments of the present disclosure.
FIG. 14 is a structural schematic diagram of a communication apparatus provided in some embodiments of the present disclosure.

### DETAILED DESCRIPTION

Below, the technical solutions in the present disclosure will be described clearly and completely with reference to the drawings in the present disclosure, and obviously, the described embodiments are only a part of the embodiments of the present disclosure, not all of the embodiments. Based on the embodiments in the present disclosure, all other embodiments obtained by those ordinary skilled in the art without creative work fall within the scope of protection of the present disclosure.

It should be noted that, in the present disclosure, terms such as "exemplarily" or "such as/for example/e.g." are used to indicate an example, illustration, or description. Any embodiment or design solution described with "exemplarily" or "such as/for example/e.g." in the present disclosure should not be interpreted as being more preferred or advantageous than other embodiments or design solutions. Precisely, the use of terms such as "exemplarily" or "such as/for example/e.g." is intended to present related concepts in exemplary manners.

In the following, terms such as "first" and "second" are used only for descriptive purposes and should not be understood as indicating or implying relative importance or implicitly indicating the number of the indicated technical features. Thus, features defined with "first", "second", etc., may explicitly or implicitly include one or more of the features.

In the description of the present disclosure, unless otherwise described, "/" indicates "or", for example, A/B may indicate A or B. Herein, "and/or" is only a description of an association relationship of associated objects, indicating that three relationships may exist, for example, A and/or B may indicate three cases of: only A, only B, and both A and B. In addition, "at least one" refers to one or more, and "multiple/plurality of" refers to two or more.

In an existing wireless communication system (such as long term evolution (LTE), new radio (NR), etc.), transmitted data is data mostly from an application layer, for example, an internet protocol (IP) datagram, and the length of the IP datagram is generally 1500 bytes (standard Ethernet frame) or 9000 bytes (jumbo frame). However, in future wireless communication systems (for example, 6th generation mobile communication networks (6th generation mobile networks, 6G)), due to supporting new services such as artificial intelligence (AI), sensing, and computing power, data transmitted in the system may not be an IP-based datagram, but AI data, sensing data, computing power data, etc., and such data may be collectively referred to as new-type data. These new-type data may not be from the application layer, but data generated internally within the communication system.

This new-type data transmission differs from IP datagram mainly in that: for the IP datagram, the network only needs to guarantee the transmission authorization of the IP packet; for the new-type data, the data itself may be large, and completing the all transmission of the data may need long time, and during the time, due to device or network reasons, it may not be guaranteed that the data can be successfully transmitted to the peer side within specified time, or during the transmission, the receiving side no longer needs the data, or the sending side may no longer transmit the data, etc., thereby resulting in poor reliability of the new-type data transmission.

In the current wireless communication system, for an uplink data transmission, the network schedules through an SR or a BSR of the UE; for a downlink data transmission, the network schedules according to a current downlink data volume. The network does not need to consider the complete transmission of large data (such as a large file), because the large file has already been fragmented on the application layer. Therefore, the current wireless communication system has no transmission control strategy for data with a large data volume (for example, new-type data such as AI data, sensing data, computing power data) generated internally within the system, which cannot guarantee the transmission reliability of data.

For the above technical problems, the embodiments of the present disclosure provide a data transmission control method with an idea of: determine whether a first condition is met; in response that the first condition is met, a first communication node sends a first message to a second communication node to request a transmission of new-type data; then receives a second message sent from the second communication node; the second message is used to indicate whether to transmit the new-type data between the first communication node and the second communication node. It may be understood that the present disclosure provides a trigger process for the new-type data transmission, enabling the first communication node to transmit the new-type data after confirming that it can transmit the new-type data, so as to ensure the reliability of the data transmission.

The technical solutions provided in the embodiments of the present disclosure may be applied to various wireless communication systems, for example, an NR wireless communication system, an LTE wireless communication system, a future wireless communication system, or a multi-communication fusion system, etc., which is not limited in the embodiments of the present disclosure.

In the embodiments of the present disclosure, a network architecture of a wireless communication system (including but not limited to 3G, 4G, 5G, and future wireless communication systems) may at least include a first communication node and a second communication node, where the first communication node and the second communication node communicate through a wireless channel or a wired channel.

Exemplarily, the above communication nodes (including: the first communication node and the second communication node) may be: a terminal, a base station, a core network element, or other network elements that process data.

It should be understood that, in this example, in a downlink, the first communication node may be a network side device (for example, including but not limited to a base station), and the second communication node may be a terminal side device (for example, including but not limited to a terminal device). Certainly, in an uplink, the first communication node may also be a terminal side device, and the second communication node may also be a network side device. In a device-to-device communication between two communication nodes, both the first communication node and the second communication node may be base stations or terminal devices.

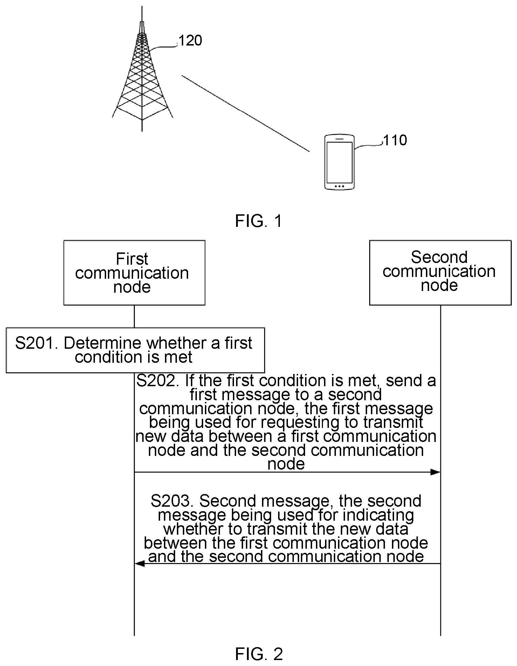

Exemplarily, taking the first communication node as a terminal device and the second communication node as a base station as an example, FIG. 1 shows an architecture schematic diagram of a wireless communication system provided in the embodiments of the present disclosure. As shown in FIG. 1, the wireless communication system includes a terminal device 110 and a base station 120. The terminal device 110 and the base station 120 perform a data transmission through a wireless channel.

Exemplarily, the terminal device 110 may be a device with a wireless transceiver function, which may be deployed on land (including indoor or outdoor, handheld, worn, or vehicle-mounted); may be deployed on water (e.g., a ship, etc.); or may also be deployed in the air (e.g., an airplane, a balloon, a satellite, etc.). The terminal device may be a mobile phone, a tablet computer (Pad), a computer with a wireless transceiver function, a virtual reality (VR) terminal, an augmented reality (AR) terminal, a wireless terminal in industrial control, a wireless terminal in self driving, a wireless terminal in remote medical, a wireless terminal in smart grid, a wireless terminal in transportation safety, a wireless terminal in smart city, a wireless terminal in smart home, etc. The embodiments of the present disclosure do not limit the application scenarios. The terminal device sometimes may also be referred to as a user, UE, access terminal, UE unit, UE station, mobile station, mobile platform, remote station, remote terminal, mobile device, UE terminal, wireless communication device, UE agent, UE apparatus, etc., which is not limited to the embodiments of the present disclosure.

Exemplarily, the base station 120 may be a base station in long term evolution (LTE) or long term evolution advanced (LTEA), or an evolutional base station (evolutional node B, eNB or eNodeB), a base station device in a 5G network, or a base station in future communication systems, etc., and the base station may include various network side devices such as macro base stations, micro base stations, home base stations, remote radio units, reconfigurable intelligent surfaces (RIS), routers, wireless fidelity (WIFI) devices, etc.

It should be noted that FIG. 1 is only an exemplary framework diagram, and the number of devices and the names of the respective devices included in FIG. 1 are not limited, and in addition to the devices shown in FIG. 1, the wireless communication system may also include other devices (such as a core network device).

It may be understood that the application scenarios for the embodiments of the present disclosure are not limited. The system architectures and service scenarios described in the embodiments of the present disclosure are intended to more clearly illustrate the technical solutions of the embodiments of the present disclosure, and do not limit the technical solutions provided in the embodiments of the present disclosure, and those ordinary skilled in the art may know that with the evolution of the network architectures and the emergence of new service scenarios, the technical solutions provided in the embodiments of the present disclosure may also be applicable for similar technical problems.

Below, the data transmission control method provided in the embodiments of the present disclosure is exemplarily introduced.

The present disclosure provides a data transmission control method, as shown in FIG. 2, the method includes the following steps S201 to S203.

In S201: a first communication node determines whether a first condition is met.

In some embodiments, the first communication node may be a sending side or a receiving side of data, which is not limited in the present disclosure.

In some embodiments, the above-mentioned first condition is used to determine whether the current device (e.g., the first communication node and/or the second communication node) or a current network status allows to initiate the new-type data transmission. Exemplarily, the above-mentioned first condition includes at least one of:
a communication network supporting the transmission of the new-type data;
the first communication node and/or the second communication node supporting the transmission of the new-type data;
a data volume of the new-type data to be transmitted being less than a data volume threshold;
a signal quality of a received signal being greater than a signal quality threshold;
a transmission rate of a channel between the first communication node and the second communication node being greater than a transmission rate threshold;
a predicted transmission duration of the new-type data to be transmitted being less than or equal to an expected transmission completion duration.

Exemplarily, the communication network may inform the terminal via broadcasting, whether the communication network supports the transmission of the new-type data. The terminal may be a terminal within a coverage range of the communication network, or a terminal having a connection relationship with the communication network. For example, in a case where the first communication node is a terminal, the first communication node may know, via broadcasting, whether the communication network supports the transmission of the new-type data.

Exemplarily, in a case where the first communication node is a terminal and the second communication node is a base station, the first communication node may know, via broadcasting, whether the second communication node supports the transmission of the new-type data; in a case where the first communication node is a base station and the second communication node is a terminal, the first communication node may acquire capability information of the second communication node, and determine whether the second communication node supports the transmission of the new-type data, based on the capability information of the second communication node.

Exemplarily, the above-mentioned data volume threshold may be determined based on the expected transmission completion duration; alternatively, the data volume threshold may also be determined based on a bandwidth used for the data transmission. It can be understood that, only in a case where the data volume of the new-type data is less than the data volume threshold, it can be ensured that the new-type data to be transmitted can be completely transmitted within expected time. Furthermore, in a case of a small bandwidth, the data volume of the new-type data to be transmitted also needs to meet a data volume limitation corresponding to the bandwidth.

Exemplarily, the above-mentioned signal quality may be represented by Reference Signal Receiving Power (RSRP). The above-mentioned received signal by the first communication node may be a reference signal. It can be understood that, in a case where the signal quality is greater than the signal quality threshold, it indicates that a channel condition between the first communication node and the second communication node is good and it can be used for the transmission of the new-type data.

It can be understood that, in a case where the transmission rate of the channel between the first communication node and the second communication node is greater than the transmission rate threshold, it indicates that the transmission rate of the channel is fast, which can ensure that the new-type data to be transmitted can be completely transmitted within the expected time.

It can be understood that, to ensure that the new-type data to be transmitted can be completely transmitted within the expected transmission completion duration, a transmission duration of the data to be transmitted may be predicted to obtain a predicted transmission duration, and the data transmission is initiated in a case where the predicted transmission duration of the data to be transmitted is less than or equal to the expected transmission completion duration.

In some embodiments, a part of the above-mentioned first conditions may be determined on the sending side, and another part of the conditions may be determined on the receiving side, which is not limited in the present disclosure. Exemplarily, assuming that the above-mentioned first communication node is the sending side (i.e., the above-mentioned step S201 is performed by the sending side), and a part of the first conditions may be determined by the sending side, and another part of the conditions are determined by the receiving side, then after completing the determination by the receiving side, the receiving side may inform the sending side of a determination result, and then the sending side determines whether the first condition is met.

In S202: in response that the first condition is met, the first communication node sends a first message to the second communication node. Correspondingly, the second communication node receives the first message sent from the first communication node.

The first message is used to request a transmission of new-type data between the first communication node and the second communication node.

In some embodiments, the second communication node may be a sending side or a receiving side of data, which is not limited in the present disclosure.

In some embodiments, the new-type data is data generated internally by the communication system. Exemplarily, the new-type data includes at least one of: AI data, sensing data, or computing power data.

In some embodiments, a data volume of the new-type data is greater than a first preset threshold. It can be understood that the data volume of the new-type data is large, which may reach hundreds of megabytes, and therefore, compared with the traditional IP datagram, the new-type data takes longer time during the transmission and may face more issues.

In some embodiments, the first message includes at least one of: a type of the new-type data to be transmitted, a data volume of the new-type data to be transmitted, an expected transmission completion duration. Exemplarily, the type of the new-type data to be transmitted may include at least one of: AI data, sensing data, computing power data.

In some embodiments, the first message may be in any one of the following transmission forms: Radio Resource Control (RRC) signaling, a Media Access Control (MAC) Control Element (CE), Downlink Control Information (DCI), Uplink Control Information (UCI), a Protocol Data Unit (PDU), or a data header indication.

In S203: the second communication node sends a second message to the first communication node. Correspondingly, the first communication node receives the second message sent from the second communication node.

The second message is used to indicate whether to transmit the new-type data between the first communication node and the second communication node.

In some embodiments, the second message includes one of:
an indication to agree the transmission of the new-type data;
an indication to reject the transmission of the new-type data;
an indication to defer the transmission of the new-type data.

In some embodiments, the second message may be in any one of the following transmission forms: RRC signaling, MAC CE, DCI, UCI, PDU, or a data header. It can be understood that the transmission form of the second message does not depend on the transmission form of the first message.

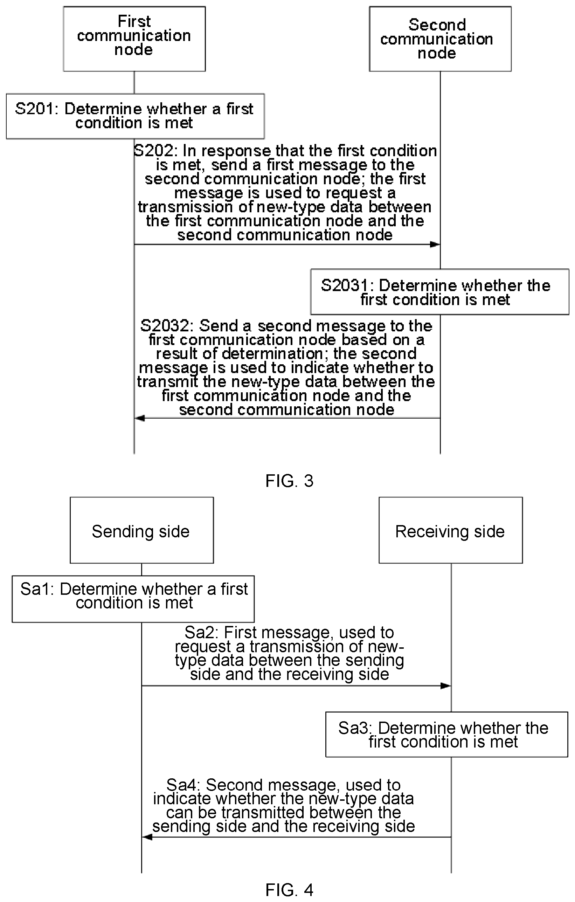

In some embodiments, as shown in FIG. 3, the above-mentioned step S203 may be implemented as the following steps.

In S2031: the second communication node determines whether the first condition is met.

Exemplarily, for the example content of the first condition, reference may be made to the description of the first condition in the above-mentioned step S201, which is not repeated here.

In S2032: the second communication node sends the second message to the first communication node, based on a determination result.

Exemplarily, in a case where the determination result of the second communication node is that the first condition is met, the second message may include: an indication to agree the transmission of the new-type data, or an indication to defer the transmission of the new-type data.

Exemplarily, in a case where the determination result of the second communication node is that the first condition is not met, the second message may include: an indication to reject the transmission of the new-type data, or an indication to defer the transmission of the new-type data.

It can be understood that, the second communication node, after receiving the first message sent from the first communication node, may determine whether the current device (e.g., the first communication node and/or the second communication node) or the current network status allows to initiate the new-type data transmission; if allowing, the second communication node may send a message including an indication to agree the transmission of the new-type data to the first communication node, thereby ensuring reliability of the data transmission.

For ease of understanding, the data transmission control method provided in the present disclosure is described below in the form of examples.

The data transmission control method provided in the present disclosure may be applied to a sending side and/or a receiving side, and the data transmission method provided in the present disclosure is described below, by taking a sending side and a receiving side as an execution entity respectively.

Example 1: the sending side triggers a new-type data transmission.

Exemplarily, as shown in FIG. 4, a process in which the sending side triggers the data transmission may be implemented as the following steps.

In Sa1: the sending side, when triggering a new-type data transmission, determines whether a first condition is met.

In Sa2: in a case where the first condition is met, the sending side sends a first message to a receiving side. Correspondingly, the receiving side receives the first message sent from the sending side.

The first message is used to request a transmission of new-type data between the sending side and the receiving side.

In Sa3: in response to the first message, the receiving side determines whether the first condition is met.

It should be noted that the above step Sa3 is an optional step, that is, determining whether the first condition is met may be performed only by the sending side, or may be performed by both the sending side and the receiving side.

In Sa4: the receiving side sends a second message to the sending side. Correspondingly, the sending side receives the second message sent from the receiving side.

The second message is used to indicate whether the new-type data can be transmitted between the sending side and the receiving side.

In some embodiments, the above method further includes: based on a determination result, determining a content of the second message.

Exemplarily, in a case where the receiving side determines that the first condition is met, the second message may include: an indication to agree the transmission of the new-type data, or an indication to defer the transmission of the new-type data.

Exemplarily, in a case where the receiving side determines that the first condition is not met, the second message may include: an indication to reject the transmission of the new-type data, or an indication to defer the transmission of the new-type data.

Example 2: the receiving side triggers a new-type data transmission.

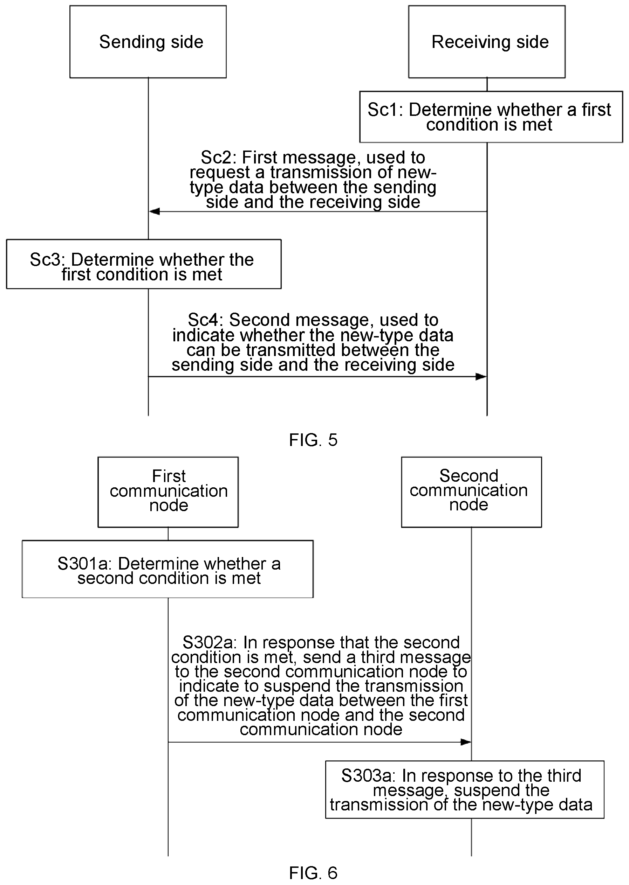

Exemplarily, as shown in FIG. 5, a process in which the receiving side triggers the data transmission, may be implemented as the following steps.

In Sc1: the receiving side, when triggering a new-type data transmission, determines whether a first condition is met.

In Sc2: in a case where the first condition is met, the receiving side sends a first message to the sending side. Correspondingly, the sending side receives the first message sent from the receiving side.

The first message is used to request a transmission of new-type data between the sending side and the receiving side.

In Sc3: in response to the first message, the sending side determines whether the first condition is met.

It should be noted that the above step Sc3 is an optional step, that is, determining whether the first condition is met may be performed only by the receiving side, or may be performed by both the sending side and the receiving side.

In Sc4: the sending side sends a second message to the receiving side. Correspondingly, the receiving side receives the second message sent from the sending side.

The second message is used to indicate whether the new-type data can be transmitted between the sending side and the receiving side.

In some embodiments, the above method further includes: based on a determination result, determining a content of the second message.

Exemplarily, in a case where the sending side determines that the first condition is met, the second message may include: an indication to agree the transmission of the new-type data, or an indication to defer the transmission of the new-type data.

Exemplarily, in a case where the sending side determines that the first condition is not met, the second message may include: an indication to reject the transmission of the new-type data, or an indication to defer the transmission of the new-type data.

In summary, based on the data transmission control method provided in the embodiments of the present disclosure, in a case where the first communication node determines that the first condition is met, the first communication node sends a first message for requesting a transmission of new-type data to the second communication node; then, the second communication node, by determining whether the first condition is met, sends a second message for indicating whether to transmit the new-type data between the first communication node and the second communication node, to the first communication node. It can be understood that the present disclosure gives a trigger process for the new-type data transmission, so that after both the sending side and the receiving side confirm that the new-type data can be transmitted, the new-type data is then transmitted, which can ensure reliability of the data transmission.

In some embodiments, in a case where the second message includes an indication to agree the transmission of the new-type data, the first communication node and the second communication node enter a transmission process of the new-type data.

A flow direction of the new-type data includes: from the first communication node to the second communication node; or from the second communication node to the first communication node.

In some embodiments, during the transmission of the new-type data between the first communication node and the second communication node, both the first communication node and the second communication node may determine whether to suspend the transmission of the new-type data, and notify the peer side.

As a possible implementation, as shown in FIG. 6, after the step S203, the above method further includes the following steps.

In S301a: during the transmission of the new-type data, the first communication node determines whether a second condition is met.

In some embodiments, the second condition is used to indicate a trigger reason for suspending the transmission of the new-type data. Exemplarily, the second condition may include at least one of:
a packet loss rate within a preset time window being greater than or equal to a second preset threshold;
a number of consecutive decryption failures being greater than or equal to a third preset threshold;
a number of consecutive integrity protection check failures being greater than or equal to a fourth preset threshold;
a current network status being unsuitable for the transmission of the new-type data.

It can be understood that if the packet loss rate within the preset time window is greater than or equal to the second preset threshold, data transmission speed may slow down, data transmission may be interrupted, or security risks may occur, etc., therefore, in a case of a large packet loss rate, it may decide to suspend the transmission of the new-type data.

Exemplarily, an encryption algorithm may be used to transmit data between the first communication node and the second communication node. The encryption algorithm is a technology used to protect data security and privacy, which may convert data with any length (referred to as "plaintext") into a character string with a fixed or variable length (referred to as "ciphertext"). The function of the encryption algorithm is to perform a regular conversion on the new-type data, so that the peer side can recover the original new-type data only when having the correct key. It can be understood that if the number of consecutive decryption failures is greater than or equal to the third preset threshold, it indicates that data security is reduced, or the encryption system is invalid, and continuing to transmit the new-type data may lead to a breakdown in a trust relationship between the first communication node and the second communication node, thereby affecting system stability, therefore, in a case where the number of consecutive decryption failures is greater than or equal to the third preset threshold, it may decide to suspend the transmission of the new-type data.

Exemplarily, an integrity protection algorithm may be used to transmit data between the first communication node and the second communication node to prevent the new-type data from being tampered with or destroyed during the transmission. It can be understood that if the number of consecutive integrity protection check failures is greater than or equal to the fourth preset threshold, it indicates that data security is reduced, and data vulnerabilities may exist, and continuing to transmit the new-type data may lead to a breakdown in a trust relationship between the first communication node and the second communication node, thereby affecting system stability, therefore, in a case where the number of consecutive integrity protection check failures is greater than or equal to the fourth preset threshold, it may decide to suspend the transmission of the new-type data.

Exemplarily, it is determined that the current network is not suitable for the transmission of the new-type data, when at least one of the following cases exists in the current communication network: slow network speed, high network latency, node failure, existence of security vulnerabilities, etc. It can be understood that, in a case where the first communication node is the sending side, if the sending side determines that the current network status is not suitable for the transmission of the new-type data, then suspension of the transmission of the new-type data is triggered; in a case where the first communication node is the receiving side, if the receiving side determines that the current network status is not suitable for receiving the new-type data, then suspension of the transmission of the new-type data is triggered.

In S302a: in a case where the second condition is met, the first communication node sends a third message to the second communication node. Correspondingly, the second communication node receives the third message sent from the first communication node.

The third message is used to indicate to suspend the transmission of the new-type data between the first communication node and the second communication node.

Exemplarily, the above third message may be in at least one of the following forms.
1. RRC signaling, for example: a new RRC signaling may be defined for indicating to suspend the transmission of the new-type data between the first communication node and the second communication node, and it may indicate a reason for suspending the transmission of the new-type data; or, existing RRC signaling may be used; or, a field for indicating to suspend the transmission of the new-type data may be added to existing RRC signaling.
2. MAC CE, for example: a new MAC CE may be defined for indicating to suspend the transmission of the new-type data between the first communication node and the second communication node, and it may indicate a reason for suspending the transmission of the new-type data; or, an existing MAC CE may be used; or, a field for indicating to suspend the transmission of the new-type data may be added to an existing MAC CE.
3. DCI or UCI, for example: a new DCI or UCI may be defined for indicating to suspend the transmission of the new-type data between the first communication node and the second communication node, and it may indicate a reason for suspending the transmission of the new-type data; or, existing DCI or UCI may be used; or, a field for indicating to suspend the transmission of the new-type data may be added to existing DCI or UCI.
4. PDU packet, for example: a new PDU packet may be defined for indicating to suspend the transmission of the new-type data between the first communication node and the second communication node, and it may indicate a reason for suspending the transmission of the new-type data; or, an existing PDU packet may be used; or, a field for indicating to suspend the transmission of the new-type data may be added to an existing PDU packet.
5. Data header, for example: a new data header may be defined for indicating to suspend the transmission of the new-type data between the first communication node and the second communication node, and it may indicate a reason for suspending the transmission of the new-type data; or, a field for indicating to suspend the transmission of the new-type data may be added to an existing data header.

In S303a: in response to the third message, the second communication node suspends the transmission of the new-type data.

It can be understood that during the transmission of the new-type data, the first communication node may determine whether the second condition for suspending the transmission of the new-type data is met, and then, in a case where the second condition is met, send a decision to suspend the transmission of the new-type data to the second communication node.

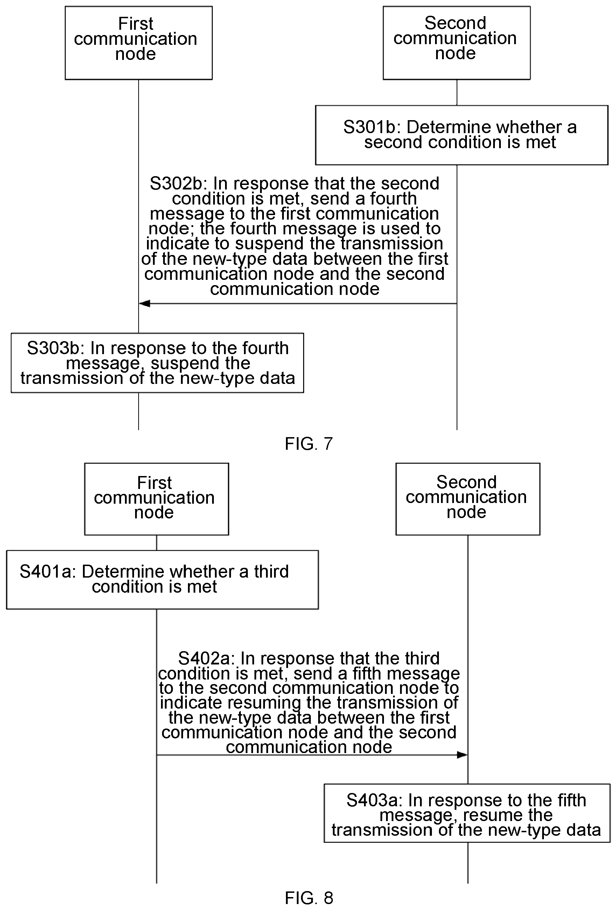

As another possible implementation, as shown in FIG. 7, after step S203, the above method further includes the following steps.

In S301b: during the transmission of the new-type data, the second communication node determines whether a second condition is met.

In S302b: in a case where the second condition is met, the second communication node sends a fourth message to the first communication node. Correspondingly, the first communication node receives the fourth message sent from the second communication node.

The fourth message is used to indicate to suspend the transmission of the new-type data between the first communication node and the second communication node.

Exemplarily, a form of the fourth message may refer to the form of the third message in the above step S302a, which is not repeated here.

In S303b: in response to the fourth message, the first communication node suspends the transmission of the new-type data.

It can be understood that during the transmission of the new-type data, the second communication node may determine whether the second condition for suspending the transmission of the new-type data is met, and then, in a case where the second condition is met, send a decision to suspend the transmission of the new-type data to the first communication node.

In some embodiments, after suspending the transmission of the new-type data, both the first communication node and the second communication node may determine whether to resume the transmission of the new-type data, and notify the peer side.

As a possible implementation, as shown in FIG. 8, the above method further includes the following steps.

In S401a: the first communication node determines whether a third condition is met.

In some embodiments, the third condition indicates a trigger reason for resuming the transmission of the new-type data. Exemplarily, the third condition includes at least one of:
a packet loss rate within a preset time window being less than a fifth preset threshold;
a number of consecutive decryption successes being greater than or equal to a sixth preset threshold;
a number of consecutive integrity protection check successes being greater than or equal to a seventh preset threshold;
a current network status being suitable for the transmission of the new-type data.

Exemplarily, the above fifth preset threshold may be less than or equal to the second preset threshold; the above sixth preset threshold may be less than, equal to, or greater than the third preset threshold; the above seventh preset threshold may be less than, equal to, or greater than the fourth preset threshold.

It may be understood that, in a case where the first communication node is a sending side, the sending side determines that the current network status is suitable for the transmission of the new-type data, then it triggers to resume the transmission of the new-type data; in a case where the first communication node is a receiving side, the receiving side determines that the current network status is suitable for receiving the new-type data, then it triggers to resume the transmission of the new-type data.

In S402a: in a case where the third condition is met, the first communication node resumes the transmission of the new-type data, and sends a fifth message to the second communication node. Correspondingly, the second communication node receives the fifth message sent from the first communication node.

The fifth message indicates resuming the transmission of the new-type data between the first communication node and the second communication node.

Exemplarily, the fifth message may be in at least one of the following forms.
1. RRC signaling, for example: a new RRC signaling may be defined to indicate resuming the transmission of the new-type data between the first communication node and the second communication node, and it may indicate a reason for resuming the transmission of the new-type data; or, existing RRC signaling may be adopted; or, a field for indicating resumption of the transmission of the new-type data may be added to existing RRC signaling.
2. MAC CE, for example: a new MAC CE may be defined to indicate resuming the transmission of the new-type data between the first communication node and the second communication node, and it may indicate a reason for resuming the transmission of the new-type data; or, an existing MAC CE may be adopted; or, a field for indicating resumption of the transmission of the new-type data may be added to an existing MAC CE.
3. DCI or UCI, for example: a new DCI or a new UCI may be defined to indicate resuming the transmission of the new-type data between the first communication node and the second communication node, and it may indicate a reason for resuming the transmission of the new-type data; or, existing DCI or UCI may be adopted; or, a field for indicating resumption of the transmission of the new-type data may be added to existing DCI or UCI.
4. PDU packet, for example: a new PDU packet may be defined to indicate resuming the transmission of the new-type data between the first communication node and the second communication node, and it may indicate a reason for resuming the transmission of the new-type data; or, an existing PDU packet may be adopted; or, a field for indicating resumption of the transmission of the new-type data may be added to an existing PDU packet.
5. Data header, for example: a new data header may be defined to indicate resuming the transmission of the new-type data between the first communication node and the second communication node, and it may indicate a reason for resuming the transmission of the new-type data; or, a field for indicating resumption of the transmission of the new-type data may be added to an existing data header.

In S403a: in response to the fifth message, the second communication node resumes the transmission of the new-type data.

It should be noted that the above steps S401a to S403a may be performed after the steps S301a to S303a; or, the above steps S401a to S403a may be performed after the steps S301b to S303b, which is not limited in the present disclosure.

It may be understood that, after suspending the transmission of the new-type data, the first communication node may determine whether the third condition for resuming the transmission of the new-type data is met, and then, in a case where the third condition is met, send a decision to resume the transmission of the new-type data to the second communication node.

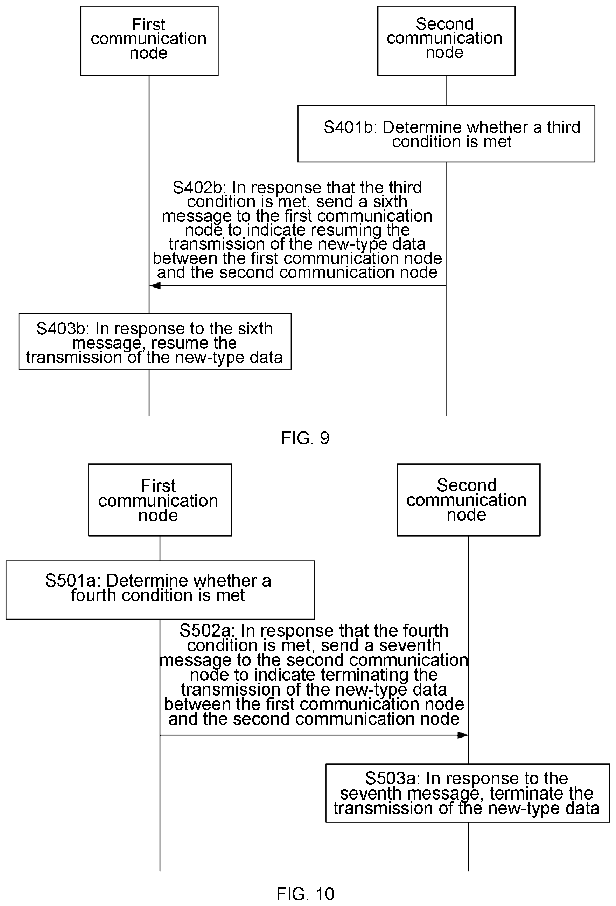

As another possible implementation, as shown in FIG. 9, the above method further includes the following steps.

In S401b: the second communication node determines whether a third condition is met.

In S402b: in a case where the third condition is met, the second communication node sends a sixth message to the first communication node and resumes the transmission of the new-type data. Correspondingly, the first communication node receives the sixth message sent from the second communication node.

The sixth message indicates resuming the transmission of the new-type data between the first communication node and the second communication node.

Exemplarily, the form of the sixth message may refer to the form of the fifth message in the step S402a described above, which is not repeated here.

In S403b: in response to the sixth message, the first communication node resumes the transmission of the new-type data.

It should be noted that the above steps S401b to S403b may be performed after the steps S301a to S303a; or, the above steps S401b to S403b may be performed after the steps S301b to S303b, which is not limited in the present disclosure.

It may be understood that, after suspending the transmission of the new-type data, the second communication node may determine whether the third condition for resuming the transmission of the new-type data is met, and then, in a case where the third condition is met, send a decision to resume the transmission of the new-type data to the first communication node.

In some embodiments, during the transmission of the new-type data, both the first communication node and the second communication node may determine whether to terminate the transmission of the new-type data, and notify the peer side.

As a possible implementation, as shown in FIG. 10, the above method further includes the following steps.

In S501a: during the transmission of the new-type data, determine whether a fourth condition is met.

In some embodiments, the fourth condition is used to indicate a trigger reason for terminating the transmission of the new-type data. Exemplarily, the fourth condition includes at least one of:
a packet loss rate within a preset time window being greater than or equal to an eighth preset threshold;
a number of consecutive decryption failures being greater than or equal to a ninth preset threshold;
a number of consecutive integrity protection check failures being greater than or equal to a tenth preset threshold;
a current network status being not suitable for the transmission of the new-type data;
the transmission of the new-type data being not completed within an expected transmission completion duration;
a data receiving side having no need for the new-type data.

Exemplarily, the above eighth preset threshold may be greater than or equal to the second preset threshold; the above ninth preset threshold may be greater than or equal to the third preset threshold; the above tenth preset threshold may be greater than or equal to the fourth preset threshold.

It may be understood that, in a case where the first communication node is a sending side, the sending side determines that the current network status is unsuitable for the transmission of the new-type data, or the sending side can no longer send the new-type data, then it triggers terminating the transmission of the new-type data; in a case where the first communication node is a receiving side, the receiving side determines that the current network status is unsuitable for receiving the new-type data, or the receiving side can no longer receive the new-type data, then it triggers terminating the transmission of the new-type data.

In some embodiments, in a case where the fourth condition includes that the transmission of the new-type data cannot be completed within the expected transmission completion duration, the fourth condition may point out a reason why the transmission of the new-type data cannot be completed within the expected transmission completion duration.

In S502a: in a case where the fourth condition is met, the first communication node sends a seventh message to the second communication node. Correspondingly, the second communication node receives the seventh message sent from the first communication node.

The seventh message is used to indicate terminating the transmission of the new-type data between the first communication node and the second communication node.

Exemplarily, the above seventh message may be in at least one of the following forms.
1. RRC signaling, for example: a new RRC signaling may be defined to indicate terminating the transmission of the new-type data between the first communication node and the second communication node, and it may indicate a reason for terminating the transmission of the new-type data; or, existing RRC signaling may be adopted; or, a field for indicating termination of the transmission of the new-type data may be added to existing RRC signaling.
2. MAC CE, for example: a new MAC CE may be defined to indicate terminating the transmission of the new-type data between the first communication node and the second communication node, and it may indicate a reason for terminating the transmission of the new-type data; or, an existing MAC CE may be adopted; or, a field for indicating termination of the transmission of the new-type data may be added to an existing MAC CE.
3. DCI or UCI, for example: a new DCI or a new UCI may be defined to indicate terminating the transmission of the new-type data between the first communication node and the second communication node, and it may indicate a reason for terminating the transmission of the new-type data; or, existing DCI or UCI may be adopted; or, a field for indicating termination of the transmission of the new-type data may be added to existing DCI or UCI.
4. PDU packet, for example: a new PDU packet may be defined to indicate terminating the transmission of the new-type data between the first communication node and the second communication node, and it may indicate a reason for terminating the transmission of the new-type data; or, an existing PDU packet may be adopted; or, a field for indicating termination of the transmission of the new-type data may be added to an existing PDU packet.
5. Data header, for example: a new data header may be defined to indicate terminating the transmission of the new-type data between the first communication node and the second communication node, and it may indicate a reason for terminating the transmission of the new-type data; or, a field for indicating termination of the transmission of the new-type data may be added to an existing data header.

In S503a: in response to the seventh message, the second communication node terminates the transmission of the new-type data.

It should be noted that, the above steps S501a to S503a may be performed after steps S201 to S203; or, the above steps S501a to S503a may be performed after steps S301a to S303a; or, the above steps S501a to S503a may be performed after steps S301b to S303b; or, the above steps S501a to S503a may be performed after steps S401a to S403a; or, the above steps S501a to S503a may be performed after steps S401b to S403bm, which is not limited in the present disclosure.

It may be understood that, during the transmission of the new-type data, the first communication node may determine whether the fourth condition for terminating the transmission of the new-type data is met, and then, in a case where the fourth condition is met, send a decision to terminate the transmission of the new-type data to the second communication node.

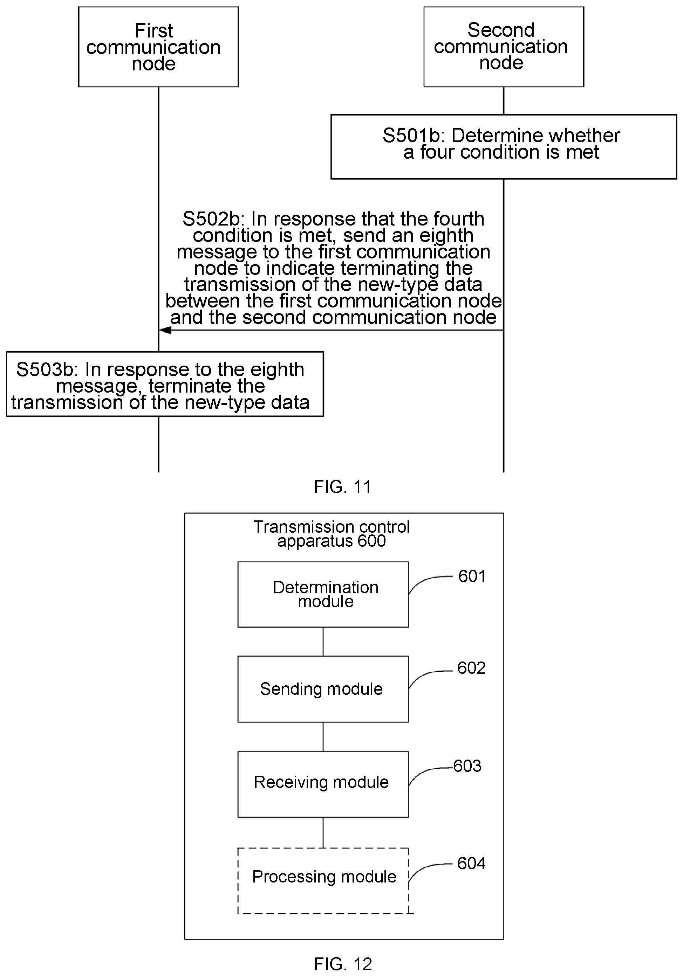

As another possible implementation, as shown in FIG. 11, the above method further includes the following steps.

In S501b: determine whether a fourth condition is met during the transmission of the new-type data.

In S502b: in a case where the fourth condition is met, the second communication node sends an eighth message to the first communication node. Correspondingly, the first communication node receives the eighth message sent from the second communication node.

In S503b: in response to the eighth message, the first communication node terminates the transmission of the new-type data.

Exemplarily, the form of the eighth message may refer to the form of the seventh message in the above step S502a, which is not repeated here.

It should be noted that, the above steps S501b to S503b may be performed after steps S201 to S203; or, the above steps S501b to S503b may be performed after steps S301a to S303a; or, the above steps S501b to S503b may be performed after steps S301b to S303b; or, the above steps S501b to S503b may be performed after steps S401a to S403a; or, the above steps S501b to S503b may be performed after steps S401b to S403b, which is not limited in the present disclosure.

It may be understood that, during the transmission of the new-type data, the second communication node may determine whether the fourth condition for terminating the transmission of the new-type data is met, and then, in a case where the fourth condition is met, send a decision to terminate the transmission of the new-type data to the first communication node.

In summary, it can be seen that the data transmission control method provided in the present disclosure may determine whether the new-type data transmission may be initiated, before transmitting the new-type data, and during the transmission of the new-type data, determine whether the new-type data transmission needs to be suspended, resumed, or terminated, and in this way, the transmission process of the new-type data with a large data volume generated internally in the system (for example, AI data, sensing data, computing power data, etc.) can be controlled, to ensure reliability of the data transmission.

The solutions of the embodiments of the present disclosure are mainly introduced from the perspective of the methods above. It may be understood that, in order to implement the above functions, a transmission control apparatus includes at least one of corresponding hardware structures and software modules that perform the respective functions. Those skilled in the art will readily realize that, in conjunction with the units and algorithm steps of each example described in the embodiments disclosed herein, the embodiments of the present disclosure may be implemented in a form of hardware or a combination of hardware and computer software. Whether a certain function is performed by hardware or by computer software driving hardware, depends on specific applications and design constraint conditions of the technical solutions. A skilled person may use different methods for each specific application to implement the described functions, but such an implementation should not be considered to be beyond the scope of the embodiments of the present disclosure.

It may be understood that, in order to implement the above functions, the transmission control apparatus includes corresponding hardware structures and/or software modules that perform the respective functions. Those skilled in the art will readily realize that, in conjunction with the algorithm steps of each example described in the embodiments of the present disclosure, the present disclosure may be implemented in a form of hardware or a combination of hardware and computer software. Whether a certain function is performed by hardware or by computer software driving hardware, depends on specific applications and design constraint conditions of the technical solutions. A skilled person may use different methods for each specific application to implement the described functions, but such an implementation should not be considered to be beyond the scope of the present disclosure.

The embodiments of the present disclosure may divide the transmission control apparatus into functional modules according to the above method embodiments. For example, each functional module may be divided corresponding to each function, or two or more functions may be integrated into a functional module. The above integrated module may be implemented in a form of hardware, or may be implemented in a form of software. It should be noted that the division of modules in the embodiments of the present disclosure is illustrative and is only a logical functional division; and there may be other divisions in actual implementations. The following takes an example for description in which each functional module is divided corresponding to each function.

FIG. 12 is a structural schematic diagram of a transmission control apparatus provided in the embodiments of the present disclosure, the transmission control apparatus is applied to a first communication node and may perform the data transmission control method provided in the above method embodiments. As shown in FIG. 12, a transmission control apparatus 600 includes: a determination module 601, a sending module 602, and a receiving module 603. In other embodiments, the transmission control apparatus 600 further includes: a processing module 604.

The determination module 601 is configured to determine whether a first condition is met.

The sending module 602 is configured to: in response that the first condition is met, send a first message to a second communication node, where the first message is used to request a transmission of new-type data between the first communication node and the second communication node.

The receiving module 603 is configured to receive a second message sent from the second communication node, where the second message is used to indicate whether to transmit the new-type data between the first communication node and the second communication node.

In some embodiments, the new-type data is data generated internally by a communication system; the new-type data includes at least one of: artificial intelligence (AI) data, sensing data, or computing power data.

In some embodiments, a data volume of the new-type data is greater than a first preset threshold.

In some embodiments, a flow direction of the new-type data includes: from the first communication node to the second communication node; or from the second communication node to the first communication node.

In some embodiments, the first condition includes at least one of: a communication network supporting the transmission of the new-type data; the first communication node and/or the second communication node supporting the transmission of the new-type data; a data volume of the new-type data to be transmitted being less than a data volume threshold; a signal quality of a received signal being greater than a signal quality threshold; a transmission rate of a channel between the first communication node and the second communication node being greater than a transmission rate threshold; a predicted transmission duration of the new-type data to be transmitted being less than or equal to an expected transmission completion duration.

In some embodiments, the second message includes one of: an indication to agree the transmission of the new-type data; an indication to reject the transmission of the new-type data; an indication to defer the transmission of the new-type data.

In some embodiments, the determination module 601 is further configured to: during the transmission of the new-type data, determine whether a second condition is met; the sending module 602 is further configured to: in response that the second condition is met, send a third message to the second communication node, where the third message is used to indicate suspension of the transmission of the new-type data between the first communication node and the second communication node.

In some embodiments, the second condition includes at least one of: a packet loss rate within a preset time window being greater than or equal to a second preset threshold; a number of consecutive decryption failures being greater than or equal to a third preset threshold; a number of consecutive integrity protection check failures being greater than or equal to a fourth preset threshold; a current network status being unsuitable for the transmission of the new-type data.

In some embodiments, the method further includes that: the receiving module 603 is further configured to: during the transmission of the new-type data, receive a fourth message sent from the second communication node, where the fourth message is used to indicate suspension of the transmission of the new-type data between the first communication node and the second communication node; and the processing module 604 is configured to: in response to the fourth message, suspend the transmission of the new-type data.

In some embodiments, the processing module 604 is further configured to: in response that a third condition is met, resume the transmission of the new-type data; and the sending module 602 is further configured to send a fifth message to the second communication node, where the fifth message is used to indicate resumption of the transmission of the new-type data between the first communication node and the second communication node.

In some embodiments, the third condition includes at least one of: a packet loss rate within a preset time window being less than a fifth preset threshold; a number of consecutive decryption successes being greater than or equal to a sixth preset threshold; a number of consecutive integrity protection check successes being greater than or equal to a seventh preset threshold; a current network status being suitable for the transmission of the new-type data.

In some embodiments, the receiving module 603 is further configured to: receive a sixth message sent from the second communication node, where the sixth message is used to indicate resumption of the transmission of the new-type data between the first communication node and the second communication node; the processing module 604 is further configured to: in response to the sixth message, resume the transmission of the new-type data.

In some embodiments, the determination module 601 is further configured to: during the transmission of the new-type data, determine whether a fourth condition is met; and the sending module 602 is further configured to: in response that the fourth condition is met, send a seventh message to the second communication node, where the seventh message is used to indicate termination of the transmission of the new-type data between the first communication node and the second communication node.

In some embodiments, the fourth condition includes at least one of: a packet loss rate within a preset time window being greater than or equal to an eighth preset threshold; a number of consecutive decryption failures being greater than or equal to a ninth preset threshold; a number of consecutive integrity protection check failures being greater than or equal to a tenth preset threshold; a current network status being not suitable for the transmission of the new-type data; the transmission of the new-type data being not completed within an expected transmission completion duration; a data receiving side having no need for the new-type data.

In some embodiments, the receiving module 603 is further configured to: during the transmission of the new-type data, receive an eighth message sent from the second communication node, where the eighth message is used to indicate termination of the transmission of the new-type data between the first communication node and the second communication node; and the processing module 604 is further configured to: in response to the eighth message, terminate the transmission of the new-type data.

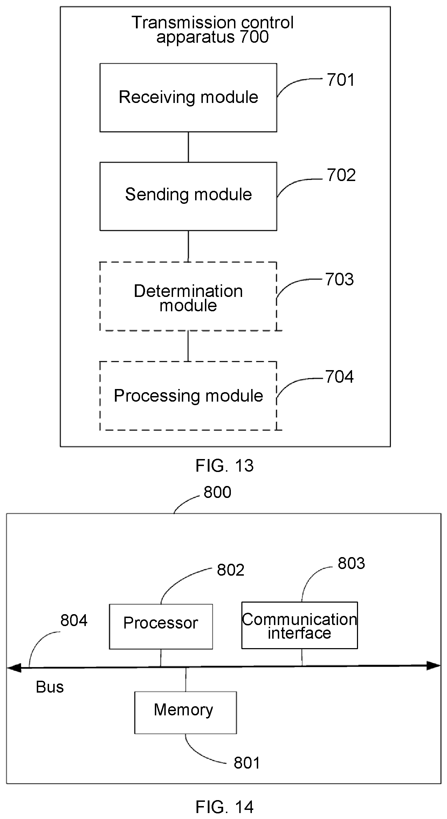

FIG. 13 is a structural schematic diagram of another transmission control apparatus provided in the embodiments of the present disclosure, and the transmission control apparatus is applied to a second communication node and may perform the data transmission control method provided in the above method embodiments. As shown in FIG. 13, the transmission control apparatus 700 includes: a receiving module 701 and a sending module 702. In other embodiments, the transmission control apparatus 700 further includes: a determination module 703 and a processing module 704.

The receiving module 701 is configured to receive a first message sent from a first communication node, where the first message is used to request a transmission of new-type data between the first communication node and the second communication node.

The sending module 702 is configured to send a second message to the first communication node, where the second message is used to indicate whether to transmit the new-type data between the first communication node and the second communication node.

In some embodiments, the new-type data is data generated internally in a communication system; and the new-type data includes at least one of: AI data, sensing data, or computing power data.

In some embodiments, a data volume of the new-type data is greater than a first preset threshold.

In some embodiments, a flow direction of the new-type data includes: from the first communication node to the second communication node; or from the second communication node to the first communication node.

In some embodiments, the second message includes one of: an indication to agree the transmission of the new-type data; an indication to reject the transmission of the new-type data; an indication to defer the transmission of the new-type data.

In some embodiments, the determination module 703 is configured to determine whether a first condition is met; and the sending module 702 may be configured to send the second message to the first communication node, based on a determination result.

In some embodiments, the first condition includes at least one of: a communication network supporting the transmission of the new-type data; the first communication node and/or the second communication node supporting the transmission of the new-type data; a data volume of the new-type data to be transmitted being less than a data volume threshold; a signal quality of a received signal being greater than a signal quality threshold; a transmission rate of a channel between the first communication node and the second communication node being greater than a transmission rate threshold; a predicted transmission duration of the new-type data to be transmitted being less than or equal to an expected transmission completion time.

In some embodiments, the receiving module 701 is further configured to: during the transmission of the new-type data, receive a third message sent from the first communication node, where the third message is used to indicate suspension of the transmission of the new-type data between the first communication node and the second communication node; and the processing module 704 is configured to: in response to the third message, suspending the transmission of the new-type data.

In some embodiments, the determination module 703 is further configured to: during the transmission of the new-type data, determining whether a second condition is met; and the sending module 702 is further configured to: in response that the second condition is met, send a fourth message to the first communication node, where the fourth message is used to indicate suspension of the transmission of the new-type data between the first communication node and the second communication node.

In some embodiments, the second condition includes at least one of: a packet loss rate within a preset time window being greater than or equal to a second preset threshold; a number of consecutive decryption failures being greater than or equal to a third preset threshold; a number of consecutive integrity protection check failures being greater than or equal to a fourth preset threshold; a current network status being unsuitable for the transmission of the new-type data.

In some embodiments, the receiving module 701 is further configured to receive a fifth message sent from the first communication node, where the fifth message is used to indicate resumption of the transmission of the new-type data between the first communication node and the second communication node; and the processing module 704 is further configured to: in response to the fifth message, resume the transmission of the new-type data.

In some embodiments, the sending module 702 is further configured to: in response that a third condition is met, send a sixth message to the first communication node, where the sixth message is used to indicate resumption of the transmission of the new-type data between the first communication node and the second communication node.

In some embodiments, the third condition includes at least one of: a packet loss rate within a preset time window being less than a fifth preset threshold; a number of consecutive decryption successes being greater than or equal to a sixth preset threshold; a number of consecutive integrity protection check successes being greater than or equal to a seventh preset threshold; a current network status being suitable for the transmission of the new-type data.

In some embodiments, the receiving module 701 is further configured to receive a seventh message sent from the first communication node, where the seventh message is used to indicate termination of the transmission of the new-type data between the first communication node and the second communication node; and the processing module 704 is further configured to: in response to the seventh message, terminate the transmission of the new-type data.

In some embodiments, the determination module 703 is further configured to: during the transmission of the new-type data, determine whether a fourth condition is met; the sending module 702 is further configured to: in response that the fourth condition is met, send an eighth message to the first communication node, where the eighth message is used to indicate termination of the transmission of the new-type data between the first communication node and the second communication node.

In some embodiments, the fourth condition includes at least one of: a packet loss rate within a preset time window being greater than or equal to an eighth preset threshold; a number of consecutive decryption failures being greater than or equal to a ninth preset threshold; a number of consecutive integrity protection check failures being greater than or equal to a tenth preset threshold; a current network status being not suitable for the transmission of the new-type data; the transmission of the new-type data being not completed within an expected transmission completion duration; a data receiving side having no need for the new-type data.

In a case where functions of the above integrated modules are implemented in a form of hardware, the embodiments of the present disclosure provide a possible structure of a communication apparatus involved in the above embodiments. As shown in FIG. 14, the communication apparatus 800 includes: a processor 802, a bus 804. In some embodiments, the communication apparatus may further include a memory 801; and in some embodiments, the communication apparatus 800 may further include a communication interface 803.

The processor 802 may implement or perform various exemplary logical blocks, modules and circuits described in conjunction with the embodiments of the present disclosure. The processor 802 may be a central processing unit, a general-purpose processor, a digital signal processor, an application specific integrated circuit, a field programmable gate array or other programmable logic devices, a transistor logic device, a hardware component or any combination thereof, which may implement or perform various exemplary logical blocks, modules and circuits described in conjunction with the embodiments of the present disclosure. The processor 802 may also be a combination that implements computing functions, for example, including a combination of one or more microprocessors, a combination of a digital signal processor (DSP) and a microprocessor, or the like.

The communication interface 803 is configured to connect with other devices via a communication network. The communication network may be an Ethernet, a radio access network, a wireless local area network (WLAN), or the like.

The memory 801 may be, but be not limited to, a read-only memory (ROM) or other types of static storage devices capable of storing static information and instructions, a random access memory (RAM) or other types of dynamic storage devices capable of storing information and instructions, or may also be an electrically erasable programmable read-only memory (EEPROM), a magnetic disk storage medium or other magnetic storage devices, or any other medium capable of being used to carry or store the desired program codes in the form of instructions or data structures and capable of being accessed by a computer.

As a possible implementation, the memory 801 may exist independently of the processor 802, and the memory 801 may be connected to the processor 802 via the bus 804 and is used for storing instructions or program codes. The processor 802, when calling and executing the instructions or program codes stored in the memory 801, is capable of implementing the data transmission control method provided by the embodiments of the present disclosure. In another possible implementation, the memory 801 may also be integrated with the processor 802.

The bus 804 may be an extended industry standard architecture (EISA) bus or the like. Buses 804 may be divided into address buses, data buses, control buses, and the like. For the convenience of representation, only one thick line is used in FIG. 14 for representation, but it does not mean that there is only one bus or one type of bus.

Some embodiments of the present disclosure provide a computer-readable storage medium (e.g., a non-transitory computer-readable storage medium), and the computer-readable storage medium has stored computer program instructions therein that, when running on a computer, cause the computer to perform the data transmission control method described in any embodiment of the above embodiments.

Exemplarily, the above-mentioned computer-readable storage medium may include, but be not limited to, a magnetic storage device (e.g., a hard disk, a floppy disk or a magnetic tape, etc.), an optical disk (e.g., a compact disk (CD) or a digital versatile disk (DVD), etc.), a smart card and a flash memory device (e.g., an erasable programmable read-only memory (EPROM), a card, a stick or a key driver, etc.). The various computer-readable storage media described in the present disclosure may represent one or more devices and/or other machine-readable storage media for storing information. The term "machine-readable storage medium" may include, but be not limited to, a radio channel and various other media capable of storing, containing, and/or carrying instructions and/or data.

The embodiments of the present disclosure provide a computer program product including instructions, and the computer program product, when running on a computer, causes the computer to perform the data transmission control method described in any embodiment of the above embodiments.

The foregoing is only the specific implementations of the present disclosure, but the protection scope of the present disclosure is not limited thereto, and any changes or substitutions within the scope of the technologies disclosed in the present disclosure should be covered within the protection scope of the present disclosure. Therefore, the protection scope of the present disclosure should be based on the protection scope of the claims.

## Claims

1. A data transmission control method, applied to a first communication node, the method comprising:
determining whether a first condition is met;
in response that the first condition is met, sending a first message to a second communication node, wherein the first message is used to request a transmission of new-type data between the first communication node and the second communication node; and
receiving a second message sent from the second communication node, wherein the second message is used to indicate whether to transmit the new-type data between the first communication node and the second communication node.

2. The method according to claim 1, wherein the new-type data is data generated internally by a communication system; the new-type data comprises at least one of: artificial intelligence (AI) data, sensing data, or computing power data.

3. The method according to claim 1, wherein a flow direction of the new-type data comprises:
from the first communication node to the second communication node; or
from the second communication node to the first communication node.

4. The method according to claim 1, wherein the first condition comprises at least one of:
a communication network supporting the transmission of the new-type data;
the first communication node and/or the second communication node supporting the transmission of the new-type data;
a data volume of the new-type data to be transmitted being less than a data volume threshold;
a signal quality of a received signal being greater than a signal quality threshold;
a transmission rate of a channel between the first communication node and the second communication node being greater than a transmission rate threshold;
a predicted transmission duration of the new-type data to be transmitted being less than or equal to an expected transmission completion duration.

5. The method according to claim 1, wherein the second message comprises one of:
an indication to agree the transmission of the new-type data;
an indication to reject the transmission of the new-type data;
an indication to defer the transmission of the new-type data.

6. The method according to claim 1, wherein the method further comprises:
during the transmission of the new-type data, determining whether a second condition is met; and
in response that the second condition is met, sending a third message to the second communication node, wherein the third message is used to indicate suspension of the transmission of the new-type data between the first communication node and the second communication node.

7. The method according to claim 6, wherein the second condition comprises at least one of:
a packet loss rate within a preset time window being greater than or equal to a second preset threshold;
a number of consecutive decryption failures being greater than or equal to a third preset threshold;
a number of consecutive integrity protection check failures being greater than or equal to a fourth preset threshold;
a current network status being unsuitable for the transmission of the new-type data.

8. The method according to claim 1, wherein the method further comprises:
during the transmission of the new-type data, receiving a fourth message sent from the second communication node, wherein the fourth message is used to indicate suspension of the transmission of the new-type data between the first communication node and the second communication node; and
in response to the fourth message, suspending the transmission of the new-type data.

9. The method according to claim 6 or 8, further comprising:
in response that a third condition is met, resuming the transmission of the new-type data, and sending a fifth message to the second communication node, wherein the fifth message is used to indicate resumption of the transmission of the new-type data between the first communication node and the second communication node.

10. The method according to claim 9, wherein the third condition comprises at least one of:
a packet loss rate within a preset time window being less than a fifth preset threshold;
a number of consecutive decryption successes being greater than or equal to a sixth preset threshold;
a number of consecutive integrity protection check successes being greater than or equal to a seventh preset threshold;
a current network status being suitable for the transmission of the new-type data.

11. The method according to claim 6 or 8, further comprising:
receiving a sixth message sent from the second communication node, wherein the sixth message is used to indicate resumption of the transmission of the new-type data between the first communication node and the second communication node; and
in response to the sixth message, resuming the transmission of the new-type data.

12. The method according to claim 1, further comprising:
during the transmission of the new-type data, determining whether a fourth condition is met; and
in response that the fourth condition is met, sending a seventh message to the second communication node, wherein the seventh message is used to indicate termination of the transmission of the new-type data between the first communication node and the second communication node.

13. The method according to claim 12, wherein the fourth condition comprises at least one of:
a packet loss rate within a preset time window being greater than or equal to an eighth preset threshold;
a number of consecutive decryption failures being greater than or equal to a ninth preset threshold;
a number of consecutive integrity protection check failures being greater than or equal to a tenth preset threshold;
a current network status being not suitable for the transmission of the new-type data;
the transmission of the new-type data being not completed within an expected transmission completion duration;
a data receiving side having no need for the new-type data.

14. The method according to claim 1, further comprising:
during the transmission of the new-type data, receiving an eighth message sent from the second communication node, wherein the eighth message is used to indicate termination of the transmission of the new-type data between the first communication node and the second communication node; and
in response to the eighth message, terminating the transmission of the new-type data.

15. A data transmission control method, applied to a second communication node, the method comprising:
receiving a first message sent from a first communication node, wherein the first message is used to request a transmission of new-type data between the first communication node and the second communication node; and
sending a second message to the first communication node, wherein the second message is used to indicate whether to transmit the new-type data between the first communication node and the second communication node.

16. The method according to claim 15, wherein the second message comprises one of:
an indication to agree the transmission of the new-type data;
an indication to reject the transmission of the new-type data;
an indication to defer the transmission of the new-type data.

17. The method according to claim 15, wherein sending the second message to the first communication node, comprises:
determining whether a first condition is met; and
sending the second message to the first communication node, based on a determination result.

18. The method according to claim 17, wherein the first condition comprises at least one of:
a communication network supporting the transmission of the new-type data;
the first communication node and/or the second communication node supporting the transmission of the new-type data;
a data volume of the new-type data to be transmitted being less than a data volume threshold;
a signal quality of a received signal being greater than a signal quality threshold;
a transmission rate of a channel between the first communication node and the second communication node being greater than a transmission rate threshold;
a predicted transmission duration of the new-type data to be transmitted being less than or equal to an expected transmission completion time.

19. The method according to claim 15, further comprising:
during the transmission of the new-type data, receiving a third message sent from the first communication node, wherein the third message is used to indicate suspension of the transmission of the new-type data between the first communication node and the second communication node; and
in response to the third message, suspending the transmission of the new-type data.

20. The method according to claim 15, further comprising:
during the transmission of the new-type data, determining whether a second condition is met; and
in response that the second condition is met, sending a fourth message to the first communication node, wherein the fourth message is used to indicate suspension of the transmission of the new-type data between the first communication node and the second communication node.

21. The method according to claim 20, wherein the second condition comprises at least one of:
a packet loss rate within a preset time window being greater than or equal to a second preset threshold;
a number of consecutive decryption failures being greater than or equal to a third preset threshold;
a number of consecutive integrity protection check failures being greater than or equal to a fourth preset threshold;
a current network status being unsuitable for the transmission of the new-type data.

22. The method according to claim 19 or 20, further comprising:
receiving a fifth message sent from the first communication node, wherein the fifth message is used to indicate resumption of the transmission of the new-type data between the first communication node and the second communication node; and
in response to the fifth message, resuming the transmission of the new-type data.

23. The method according to claim 19 or 20, further comprising:
in response that a third condition is met, sending a sixth message to the first communication node, wherein the sixth message is used to indicate resumption of the transmission of the new-type data between the first communication node and the second communication node.

24. The method according to claim 23, wherein the third condition comprises at least one of:
a packet loss rate within a preset time window being less than a fifth preset threshold;
a number of consecutive decryption successes being greater than or equal to a sixth preset threshold;
a number of consecutive integrity protection check successes being greater than or equal to a seventh preset threshold;
a current network status being suitable for the transmission of the new-type data.

25. The method according to claim 15, further comprising:
receiving a seventh message sent from the first communication node, wherein the seventh message is used to indicate termination of the transmission of the new-type data between the first communication node and the second communication node; and
in response to the seventh message, terminating the transmission of the new-type data.

26. The method according to claim 15, further comprising:
during the transmission of the new-type data, determining whether a fourth condition is met; and
in response that the fourth condition is met, sending an eighth message to the first communication node, wherein the eighth message is used to indicate termination of the transmission of the new-type data between the first communication node and the second communication node.

27. The method according to claim 26, wherein the fourth condition comprises at least one of:
a packet loss rate within a preset time window being greater than or equal to an eighth preset threshold;
a number of consecutive decryption failures being greater than or equal to a ninth preset threshold;
a number of consecutive integrity protection check failures being greater than or equal to a tenth preset threshold;
a current network status being not suitable for the transmission of the new-type data;
the transmission of the new-type data being not completed within an expected transmission completion duration;
a data receiving side having no need for the new-type data.

28. A communication apparatus, comprising: a memory and a processor; wherein the memory and the processor are coupled; the memory is configured to store instructions executable by the processor; and the processor, upon executing the instructions, performs the data transmission control method according to any one of claims 1 to 27.

29. A computer-readable storage medium, wherein computer instructions are stored on the computer-readable storage medium, and the computer instructions, upon running on an electronic device, cause the electronic device to perform the data transmission control method according to any one of claims 1 to 27.
